(19) **Europäisches Patentamt European Patent Office Office européen des brevets**

(11) **EP 4 650 936 A1**

(12) **EUROPEAN PATENT APPLICATION**
published in accordance with Art. 153(4) EPC

(43) Date of publication:
**19.11.2025 Bulletin 2025/47**

(21) Application number: **24829992.7**

(22) Date of filing: **21.03.2024**

(51) International Patent Classification (IPC):
**G06F 3/14** (2006.01)

(52) Cooperative Patent Classification (CPC):
**G06F 3/14; G09F 9/30; G09F 19/12; G09G 5/14**

(86) International application number:
**PCT/CN2024/082925**

(87) International publication number:
**WO 2025/001339 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.06.2023 CN 202310770373**

(71) Applicant: **Honor Device Co., Ltd.
Shenzhen, Guangdong 518040 (CN)**

(72) Inventors:
• **SHI, Cong
  Shenzhen, Guangdong 518040 (CN)**
• **LUO, Ming
  Shenzhen, Guangdong 518040 (CN)**

(74) Representative: **Gill Jennings & Every LLP
The Broadgate Tower
20 Primrose Street
London EC2A 2ES (GB)**

(54) **DISPLAY METHOD AND ELECTRONIC DEVICE**

(57)    This application relates to the field of foldable screen technologies, and provides a display method and an electronic device. The method is applied to a folding-screen electronic device including a first display portion and a second display portion. The method includes: displaying, based on an observation point of a user and a three-dimensional model of a preset object at a first moment, a first projected image of the preset object through the first display portion, and displaying a second projected image of the preset object through the second display portion when it is determined that a folding-screen electronic device is in a half-folded state; and displaying, based on a second position, a third projected image of the preset object through the first display portion, and displaying a fourth projected image of the preset object through the second display portion when it is detected that the observation point of the user is moved from a first position to the second position. Through the method provided in this application, a three-dimensional visual effect of the preset object may be presented based on a folding property of the folding-screen electronic device, thereby increasing a utilization rate of the folding property of the folding-screen electronic device.

FIG. 4

## Description

This application claims priority to Chinese Patent Application No. 202310770373.6, filed with the China National Intellectual Property Administration on June 27, 2023 and entitled "DISPLAY METHOD AND ELECTRONIC DEVICE", which is incorporated herein by reference in its entirety.

## TECHNICAL FIELD

This application relates to the field of folding screen technologies, and in particular, to a display method and an electronic device.

## BACKGROUND

With the rapid development of electronic technology, products of electronic devices are updated more frequently, and forms thereof are also gradually diversified. A folding-screen electronic device has emerged. When the folding-screen electronic device is in a folded state, a size thereof is almost the same as that of a conventional electronic device having a same appearance size. However, after a foldable screen is unfolded, a size of a displayable screen may be twice or even more than that of a conventional folding-screen electronic device.

Currently, compared with the conventional electronic device, the folding-screen electronic device not only has a larger displayable screen, but also urgently needs to develop a special function having a folding property, to reflect unique value of the folding-screen electronic device, and improve unique user experience for the folding-screen electronic device.

## SUMMARY

This application provides a display method and an electronic device. When a folding-screen electronic device is in a half-folded state, a projected image thereof is displayed on a display screen based on an observation point of a user and a three-dimensional model of a preset object. A three-dimensional effect is presented on the projected image through a folding property of the folding-screen electronic device, which increases a utilization rate of the folding property of the folding-screen electronic device, increases playability of the folding-screen electronic device, and enhances gaming experience of a user.

According to a first aspect, this application provides a display method. The method is applied to a folding-screen electronic device including a first display portion and a second display portion, and includes: determining that the folding-screen electronic device is in a half-folded state, where the half-folded state indicates that an included angle between the first display portion and the second display portion is between a first threshold and a second threshold; determining, at a first moment, that an observation point of a user is located at a first position, displaying a first projected image of a preset object through the first display portion, and displaying a second projected image of the preset object through the second display portion, where the first projected image and the second projected image are determined based on a three-dimensional model of the preset object and the first position; and determining, at a second moment after the first moment, that the observation point of the user is at a second position different from the first position, displaying a third projected image of the preset object through the first display portion, and displaying a fourth projected image of the preset object through the second display portion, where the third projected image and the fourth projected image are determined based on the three-dimensional model of the preset object and the second position.

In embodiments of this application, in the folding-screen electronic device with a screen in a half-folded state, the first projected image and the second projected image of the preset object are respectively displayed through the first display portion and the second display portion based on the position of the observation point of the user and the three-dimensional model of the preset object. Because the folding-screen electronic device has a specific folding angle, the first projected image and the second projected image that are seen by the user based on the first position present a three-dimensional effect. In addition, when the observation point of the user is moved from the first position to the second position, the folding-screen electronic device redisplays the projected image of the preset object based on the detected change of the observation point and the second position where the user is located. In this way, the third projected image and the fourth projected image seen by the user at the second position are different from the first projected image and the second projected image seen by the user at the first position. The projected images may change with the movement of the observation point of the user, and different viewing effects are presented based on different angles of the observation point of the user. According to the method provided in this application, a three-dimensional visual effect of the preset object is presented based on the folding property of the folding-screen electronic device. In addition, an image seen by the user may change with the movement of the observation point, which increases a utilization rate of the folding property of the folding-screen electronic device and enhances gaming experience of the user.

With reference to the first aspect, in some implementations of the first aspect, the method further includes:

establishing a preset coordinate system based on the folding-screen electronic device, and representing the first position and the three-dimensional model of the preset object in the preset coordinate system; and determining the first projected image and the second projected image based on the preset coordinate system, the first position, and the three-dimensional model of the preset object.

It should be understood that a principle of the method for determining the first projected image and the second projected image is the same as that of a method for determining the third projected image and the fourth projected image. To avoid repetition, in embodiments of this application, the method for determining the first projected image and the second projected image is used as an example for description.

With reference to the first aspect, in some implementations of the first aspect, the first projected image is represented through coordinates of a plurality of first intersection points, and the second projected image is represented through coordinates of a plurality of second intersection points; and the determining the first projected image and the second projected image based on the preset coordinate system, the first position, and the three-dimensional model of the preset object includes: determining, based on the preset coordinate system, a first plane expression of a plane where the first display portion is located in the preset coordinate system, a second plane expression of a plane where the second display portion is located in the preset coordinate system, and first coordinates of the first position in the preset coordinate system; determining a plurality of straight line expressions formed by the first coordinates and a plurality of second coordinates, where the plurality of second coordinates are coordinates of all or a part of data points of the three-dimensional model of the preset object in the preset coordinate system; determining the coordinates of the plurality of first intersection points based on the plurality of straight line expressions and the first plane expression; and determining the coordinates of the plurality of second intersection points based on the plurality of straight line expressions and the second plane expression.

It should be understood that the three-dimensional model of the preset object stored in the folding-screen electronic device refers to a data model configured to describe a three-dimensional form of the preset object. Optionally, the model may be a three-dimensional model of a virtual object constructed through three-dimensional model software, or may be a three-dimensional model of a physical object obtained by capturing an outline of the physical object by a three-dimensional camera. Data of the three-dimensional model stored in the folding-screen electronic device may be point cloud data. An obtaining manner of the three-dimensional model and a data type thereof are not specifically limited in this application.

It should be further understood that, the preset coordinate system may be any three-dimensional coordinate system. Regardless of whether the preset coordinate system is used as a reference system, during specific implementation, coordinates of all or a part of the data points of the three-dimensional model should be converted to coordinate expressions with the preset coordinate system as the reference system. However, the preset coordinate system is not specifically limited in this application.

In this embodiment of this application, the first projected image is represented by the coordinates of the plurality of first intersection points, and the second projected image is represented by the coordinates of the plurality of second intersection points. When the folding-screen electronic device is in the half-folded state, a three-dimensional effect may be presented on the preset object seen by the user who uses a first coordinate position as the observation point, thereby helping to improve player experience of the user.

With reference to the first aspect, in some implementations of the first aspect, the first projected image is represented through the coordinates and colors of the plurality of first intersection points, and the second projected image is represented through the coordinates and colors of the plurality of second intersection points. The method further includes: determining color information of a plurality of data points on the three-dimensional model of the preset object corresponding to the plurality of first intersection points; and determining color information of a plurality of data points on the three-dimensional model of the preset object corresponding to the plurality of second intersection points.

It should be understood that the three-dimensional model of the preset object stored by the folding-screen electronic device includes coordinates of data points on the three-dimensional model and colors of the data points, and the colors of the plurality of first intersection points and the plurality of second intersection points should respectively correspond to the plurality of data points on the three-dimensional model of the preset object.

Optionally, the colors of the data points included in the three-dimensional model of the preset object may be represented by three primary colors of red, green, and blue (red, green, blue, RGB).

Optionally, the colors of the plurality of first intersection points and the plurality of second intersection points should be in one-to-one correspondence with the colors of the plurality of data points on the three-dimensional model of the preset object, or a preset coefficient may be assigned to cause the corresponding color to be lighter or darker. This is not specifically limited in this application.

With reference to the first aspect, in some implementations of the first aspect, when the folding-screen electronic device is in the half-folded state, a curved transition portion is formed on a connection portion between the first display portion and the second display portion. The method further includes: displaying a fifth projected image by the curved transition portion at the first moment, where the fifth projected image is determined based on the first position and the three-dimensional model of the preset object; and displaying a sixth projected image by the curved transition portion at the second moment, where the sixth projected image is determined based on the second position and the three-dimensional model of the preset object.

It should be understood that when the curved transition portion exists in the connection portion between the first display portion and the second display portion, the foregoing first projected image and the third projected image can be displayed only in the first display portion, and the second projected image and the fourth projected image can also be displayed only in the second display portion. In this way, the curved surface of the connection portion between the two display portions generates a bright line because no image is displayed, which affects visual experience of the user.

According to the method provided in embodiments of this application, when the curved transition portion exists in the connection portion between the first display portion and the second display portion of the folding-screen electronic device, the fifth projected image/the sixth projected image are displayed in the curved transition portion. At the first moment, the user sees, based on the observation point of the user, the fifth projected image in addition to the first projected image and the second projected image. At the second moment, the sixth projected image is displayed on the curved transition portion. The user sees, based on the observation point of the user, the sixth projected image in addition to the third projected image and the fourth projected image. Displaying the fifth projected image/the sixth projected image on the curved surface where the screen is curved can weaken the bright line generated by the curved surface, optimizing the visual experience of the user.

With reference to the first aspect, in some implementations of the first aspect, the fifth projected image is represented through coordinates of a plurality of third intersection points, and before the displaying a fifth projected image by the curved transition portion, the method further includes: determining a curved surface expression of the curved transition portion in a preset coordinate system based on a curved surface radius of the curved transition portion and the preset coordinate system; and determining the coordinates of the plurality of third intersection points based on the plurality of straight line expressions and the curved surface expression.

It should be understood that the method for determining the coordinates of the plurality of third intersection points is similar to the foregoing method for determining the coordinates of the plurality of first intersection points. Details are not described herein again.

With reference to the first aspect, in some implementations of the first aspect, before the determining a plurality of straight line expressions formed by the first coordinates and a plurality of second coordinates, the method further includes: determining, based on a size of the first display portion and a size of the second display portion, whether a projected image of the three-dimensional model of the preset object exceeds a display range of the first display portion and/or a display range of the second display portion; and the determining a plurality of straight line expressions formed by the first coordinates and a plurality of second coordinates includes: determining the plurality of straight line expressions formed by the first coordinates and the plurality of second coordinates when the first projected image does not exceed the display range of the first display portion, and the second projected image does not exceed the display range of the second display portion.

It should be understood that the display range of the first display portion and a display range of the second display portion are fixed, but the observation point of the user may move. As the observation point of the user changes, the projected image of the three-dimensional model of the preset object may exceed the display range of the first display portion and/or the display range of the second display portion.

If the first projected image exceeds the display range of the first display portion and/or the second projected image exceeds the display range of the second display portion, before the plurality of straight line expressions formed by the first coordinates and a plurality of second coordinates are determined, the three-dimensional model of the preset object based on the preset coordinate system needs to be de-magnified, until the first projected image does not exceed the display range of the first display portion and the second projected image does not exceed the display range of the second display portion.

With reference to the first aspect, in some implementations of the first aspect, the display range of the first display portion is represented through a plurality of first boundary coordinates, the display range of the second display portion is represented through a plurality of second boundary coordinates, and the determining, based on a size of the first display portion and a size of the second display portion, whether a projected image of the three-dimensional model of the preset object exceeds a display range of the first display portion and/or a display range of the second display portion includes: determining the plurality of first boundary coordinates of the first display portion in the preset coordinate system and the plurality of second boundary coordinates of the second display portion in the preset coordinate system based on the size of the first display portion and the size of the second display portion; determining a first straight line expression formed by the first coordinates and coordinates of a preset data point on the three-dimensional model of the preset object, where the preset data point is at least one data point among front and rear vertices, left and right vertices, and upper and lower vertices of the three-dimensional model in the preset coordinate system; determining coordinates of a fourth intersection point based on the first straight line expression and the first plane expression, and determining coordinates of a fifth intersection point based on the first straight line expression and the second plane expression; and determining whether the coordinates of the fourth intersection point are within the display range of the first display portion represented by the plurality of first boundary coordinates, and whether the coordinates of the fifth intersection point are within the display range of the second display portion represented by the plurality of second boundary coordinates.

It should be understood that when an intersection point of the straight line expression and the first plane expression or the second plane expression is calculated, if excessive data points are used on the three-dimensional model of the preset object, a computing burden on the folding-screen electronic device may be caused. To reduce computing power consumption of the folding-screen electronic device, one possible implementation is as follows. Only a fourth intersection point and a fifth intersection point of the first straight line expression formed by the preset data point and the first coordinates, and the first plane expression and the second plane expression are calculated. The preset data point is at least one data point among the front and rear vertices, the left and right vertices, and the upper and lower vertices of the three-dimensional model, that is, an edge point of the three-dimensional model. Therefore, if the fourth intersection point is within the display range of the first display portion, and the fifth intersection point is within the display range of the second display portion, the projected image of the three-dimensional model of the preset object does not exceed the display range of the first display portion, and does not exceed the display range of the second display portion.

Optionally, front and rear orientations, left and right orientations, and upper and lower orientations of the three-dimensional model of the preset object may be based on the observation point of the user. This is not limited in this application.

According to the method provided in this application, before the first display portion displays the first projected image of the preset object, and the second display portion displays the second projected image of the preset object, it is determined in advance, based on the preset data point, whether the projected image of the three-dimensional model of the preset object exceeds the display range of the first display portion and/or the display range of the second display portion. When it is determined that the first projected image does not exceed the display range of the first display portion and the second projected image does not exceed the display range of the second display portion, subsequent display processing is performed based on all or a part of the data points of the three-dimensional model of the preset object on the preset coordinate system. This helps save computing power of the folding-screen electronic device, reduce calculation time of a display process, and bring a smoother experience to the user.

With reference to the first aspect, in some implementations of the first aspect, the method further includes: determining, based on the size of the first display portion and the size of the second display portion, whether the first projected image and the second projected image exceed the display range of the first display portion and/or the display range of the second display portion; and the displaying a first projected image of a preset object through the first display portion, and displaying a second projected image of the preset object through the second display portion include: displaying the first projected image of the preset object through the first display portion, and displaying the second projected image of the preset object through the second display portion when the first projected image does not exceed the display range of the first display portion and the second projected image does not exceed the display range of the second display portion.

However, if the first projected image exceeds the display range of the first display portion, and/or the second projected image exceeds the display range of the second display portion, the first projected image and the second projected image which have been displayed need to be de-magnified in a same proportion based on a folding line of the folding-screen electronic device, to obtain an updated first projected image and an updated second projected image, until the updated first projected image does not exceed the display range of the first display portion and the updated second projected image exceeds the display range of the second display portion. In this case, the updated first projected image is displayed through the first display portion, and the updated second projected image is displayed through the second display portion.

According to the method provided in this application, when the first projected image exceeds the display range of the first display portion, and/or the second projected image exceeds the display range of the second display portion, adjustment may be performed in time, so that the user finally sees a complete projected image, thereby avoiding affecting user experience because the projected image exceeds the display range.

With reference to the first aspect, in some implementations of the first aspect, the preset coordinate system is established by using a folding line between the first display portion and the second display portion as an X axis, a side edge of the second display portion as a Y axis, and a side edge of the first display portion as a Z axis, and the side edge of the first display portion and the side edge of the second display portion are in a same straight line when the included angle between the first display portion and the second display portion is 180 degrees.

According to the method provided in this application, compared with a randomly established coordinate system, when the projected image of the preset object is calculated, boundaries of the first display portion and the second display portion can be positioned more easily, and calculation capability of the folding-screen electronic device can be saved.

With reference to the first aspect, in some implementations of the first aspect, when the included angle between the first display portion and the second display portion is 90 degrees, the preset coordinate system is an orthogonal coordinate system.

With reference to the first aspect, in some implementations of the first aspect, when the included angle between the first display portion and the second display portion is not 90 degrees, the preset coordinate system is a non-orthogonal coordinate system.

With reference to the first aspect, in some implementations of the first aspect, the observation point of the user is a midpoint of a connecting line between a pair of eyes of the user; and the determining the first position includes: determining a left eye position of the user and a right eye position of the user by a camera; and determining a midpoint position between the left eye position and the right eye position.

According to a second aspect, this application provides a display apparatus, including a processing module and a display module. The processing module is configured to: determine that the folding-screen electronic device is in a half-folded state, and detect, at a first moment, a first position where an observation point of a user is located. The display module is configured to: display a first projected image of a preset object based on the first position through the first display portion, and display a second projected image of the preset object through the second display portion, where the first projected image and the second projected image are determined based on the three-dimensional model of the preset object and the first position, and the half-folded state indicates that an included angle between the first display portion and the second display portion is between a first threshold and a second threshold. The processing module is further configured to: detect, at a second moment after the first moment, a second position where the observation point of the user is located. The display module is configured to: display a third projected image of the preset object based on the second position through the first display portion, and display a fourth projected image of the preset object through the second display portion, where the third projected image and the fourth projected image are determined based on the three-dimensional model of the preset object and the second position.

Optionally, the processing module is further configured to: establish a preset coordinate system based on the folding-screen electronic device, and represent the first position and the three-dimensional model of the preset object in the preset coordinate system; and determine the first projected image and the second projected image based on the preset coordinate system, the first position, and the three-dimensional model of the preset object.

Optionally, the processing module is further configured to: determine, based on the preset coordinate system, a first plane expression of a plane where the first display portion is located in the preset coordinate system, a second plane expression of a plane where the second display portion is located in the preset coordinate system, and first coordinates of the first position in the preset coordinate system; determine a plurality of straight line expressions formed by the first coordinates and a plurality of second coordinates, where the plurality of second coordinates are coordinates of all or a part of data points of the three-dimensional model of the preset object in the preset coordinate system; determine the coordinates of the plurality of first intersection points based on the plurality of straight line expressions and the first plane expression; and determine coordinates of the plurality of second intersection points based on the plurality of straight line expressions and the second plane expression.

Optionally, the processing module is further configured to: determine color information of a plurality of data points on the three-dimensional model of the preset object corresponding to the plurality of first intersection points; and determine color information of a plurality of data points on the three-dimensional model of the preset object corresponding to the plurality of second intersection points.

Optionally, the display module is further configured to: display a fifth projected image by the curved transition portion at the first moment, where the fifth projected image is determined based on the first position and the three-dimensional model of the preset object; and display a sixth projected image by the curved transition portion at the second moment, where the sixth projected image is determined based on the second position and the three-dimensional model of the preset object.

Optionally, the processing module is further configured to: determine a curved surface expression of the curved transition portion in a preset coordinate system based on a curved surface radius of the curved transition portion and the preset coordinate system; and determine the coordinates of the plurality of third intersection points based on the plurality of straight line expressions and the curved surface expression.

Optionally, the processing module is further configured to: determine, based on a size of the first display portion and a size of the second display portion, whether a projected image of the three-dimensional model of the preset object exceeds a display range of the first display portion and/or a display range of the second display portion; and the determining a plurality of straight line expressions formed by the first coordinates and a plurality of second coordinates includes: determine the plurality of straight line expressions formed by the first coordinates and the plurality of second coordinates when the first projected image does not exceed the display range of the first display portion and the second projected image does not exceed the display range of the second display portion.

Optionally, the processing module is further configured to: determine the plurality of first boundary coordinates of the first display portion in the preset coordinate system and the plurality of second boundary coordinates of the second display portion in the preset coordinate system based on the size of the first display portion and the size of the second display portion; determine a first straight line expression formed by the first coordinates and coordinates of a preset data point on the three-dimensional model of the preset object, where the preset data point is at least one data point among front and rear vertices, left and right vertices, and upper and lower vertices of the three-dimensional model in the preset coordinate system; determine coordinates of a fourth intersection point based on the first straight line expression and the first plane expression, and determine coordinates of a fifth intersection point based on the first straight line expression and the second plane expression; and determine whether the coordinates of the fourth intersection point are within the display range of the first display portion represented by the plurality of first boundary coordinates and whether the coordinates of the fifth intersection point are within the display range of the second display portion represented by the plurality of second boundary coordinates.

Optionally, the processing module is further configured to: determine, based on the size of the first display portion and the size of the second display portion, whether the first projected image and the second projected image exceed the display range of the first display portion and/or the display range of the second display portion; and display the first projected image of the preset object through the first display portion, and display the second projected image of the preset object through the second display portion when the first projected image does not exceed the display range of the first display portion and the second projected image does not exceed the display range of the second display portion.

Optionally, the processing module is further configured to: establish the preset coordinate system by using a folding line between the first display portion and the second display portion as an X axis, a side edge of the second display portion as a Y axis, and a side edge of the first display portion as a Z axis, where the side edge of the first display portion and the side edge of the second display portion are in a same straight line when the included angle between the first display portion and the second display portion is 180 degrees.

Optionally, when the included angle between the first display portion and the second display portion is 90 degrees, the preset coordinate system is an orthogonal coordinate system.

Optionally, when the included angle between the first display portion and the second display portion is not 90 degrees, the preset coordinate system is a non-orthogonal coordinate system.

Optionally, the processing module is further configured to: determine a left eye position of the user and a right eye position of the user by a camera; and determine a midpoint position between the left eye position and the right eye position.

According to a third aspect, this application provides another folding-screen electronic device, including a processor. The processor is coupled to a memory, and may be configured to execute an instruction in the memory, to implement the method according to any possible implementation of the first aspect. Optionally, the folding-screen electronic device may further include a memory. Optionally, the folding-screen electronic device further includes a communication interface, and the processor is coupled to the communication interface.

According to a fourth aspect, a computer program product is provided. The computer program product includes a computer program (which may also be referred to as code or an instruction). When the computer program is run, the computer is caused to perform the method according to any possible implementation of the first aspect.

According to a fifth aspect, a computer-readable storage medium is provided. The computer-readable storage medium stores a computer program (which may also be referred to as code or an instruction). When the computer program runs on a computer, the computer is caused to perform the method according to any possible implementation of the first aspect.

**BRIEF DESCRIPTION OF DRAWINGS**

FIG. 1 is a schematic structural diagram of a folding-screen electronic device according to an embodiment of this application;

FIG. 2 is a block diagram of a software structure of a folding-screen electronic device according to an embodiment of this application;

FIG. 3 is an example diagram a three-dimensional model of a preset object according to this application;

FIG. 4 is an example diagram of a display interface of a display method according to this application;

FIG. 5 is an example diagram of a display interface of another display method according to this application;

FIG. 6 is a schematic diagram of a first position according to an embodiment of this application;

FIG. 7 is a schematic diagram of a form of a folding-screen electronic device according to this application;

FIG. 8 is a schematic flowchart of a method for determining a first projected image and a second projected image according to this application;

FIG. 9 is a schematic flowchart of a method for determining a display range according to an embodiment of this application;

FIG. 10 is an example diagram of a preset coordinate system according to an embodiment of this application; and

FIG. 11 is a schematic block diagram of a folding-screen electronic device according to this application.

## DESCRIPTION OF EMBODIMENTS

The technical solutions in this application are described in the following with reference to the accompanying drawings.

To clearly describe the technical solutions in embodiments of this application, terms such as "first" and "second" are used in embodiments of this application to distinguish between same items or similar items that provide basically same functions or purposes. A person skilled in the art may understand that the terms, such as "first" and "second", do not limit a quantity or an execution sequence, and the terms, such as "first" and "second", do not indicate a definite difference.

It should be noted that in embodiments of this application, words such as "an example" or "for example" are used to represent giving an example, an illustration, or a description. Any embodiment or design solution described as "an example" or "for example" in this application should not be explained as being more preferred or having more advantages than another embodiment or design solution. Exactly, use of the words such as "an example" or "for example" is intended to present a related concept in a specific manner.

In embodiments of this application, "at least one" refers to one or more, and "a plurality of" refers to two or more. The term "and/or" describes an association relationship between associated objects and indicates that three relationships may exist. For example, A and/or B may indicate the following three cases: only A exists, both A and B exist, and only B exists, where A and B may be singular or plural. The character "/" in this specification generally indicates an "or" relationship between the associated objects. "At least one of the following items (pieces)" or a similar expression thereof refers to any combination of these items, including any combination of singular items (pieces) or plural items (pieces). For example, at least one of a, b, or c may represent: a, b, c, a-b, a-c, b-c, or a-b-c, where a, b, and c may be one or more.

With the rapid development of electronic technology, products of electronic devices are updated more frequently, and forms thereof are also gradually diversified. A folding-screen electronic device has emerged. When the folding-screen electronic device is in a folded state, a size thereof is almost the same as that of a conventional electronic device having a same appearance size. However, after a foldable screen is unfolded, a size of a displayable screen may be twice or even more than that of a conventional folding-screen electronic device.

Currently, compared with the conventional electronic device, in addition to having a larger displayable screen, usage experience of the folding-screen electronic device is indifferent from that of the conventional electronic device, and more new and substantial functions are not brought to the folding-screen electronic device by fully using a folding property of a foldable screen.

In view of the above, the folding-screen electronic device has low utilization of the folding property, and a special function having a folding property urgently needs to developed, so as to reflect unique value of the folding-screen electronic device, and improve unique user experience for the folding-screen electronic device.

In view of this, this application provides a display method and an electronic device. When a folding-screen electronic device is in a half-folded state, a projected image thereof is displayed on a display screen based on an observation point of a user and a three-dimensional model of a preset object. A three-dimensional effect is presented on the projected image through a folding property of the folding-screen electronic device, which increases a utilization rate of the folding property of the folding-screen electronic device, increases playability of the folding-screen electronic device, and enhances gaming experience of a user.

It should be understood that the display method provided in embodiments of this application is applied to a folding-screen electronic device including a first display portion and a second display portion. The foregoing half-folded state means that an included angle between the first display portion and the second display portion is between a first threshold and a second threshold. Values of the first threshold and the second threshold are not specifically limited in this application. It should be noted that, in the folding-screen electronic device herein, the first display portion and the second display portion are two display portions into which a complete display screen is divided. The folding-screen electronic device may be folded and unfolded based on an intersection line of the first display portion and the second display portion. The first display portion and the second display portion may display an image and a video as a whole, or may separately display an image and a video.

It should be understood that when the first threshold is 0 degrees and the second threshold is 180 degrees, the folding-screen electronic device is in an inward half-folded state. When the first threshold is 180 degrees and the second threshold is 360 degrees, the folding-screen electronic device is in an outward half-folded state. The inward half-folded state and the outward half-folded state of the folding-screen electronic device are both applicable to this application. A folding form of the folding-screen electronic device presented in the accompanying drawings in embodiments of this application does not constitute a specific limitation to the folding form of the folding-screen electronic device in this application.

To help better understand embodiments of this application, the folding-screen electronic device in embodiments of this application is described below. The folding-screen electronic device in this application may be any electronic device having a foldable screen, such as a mobile phone and a tablet computer. Types of the folding-screen electronic device in this application are not specifically limited.

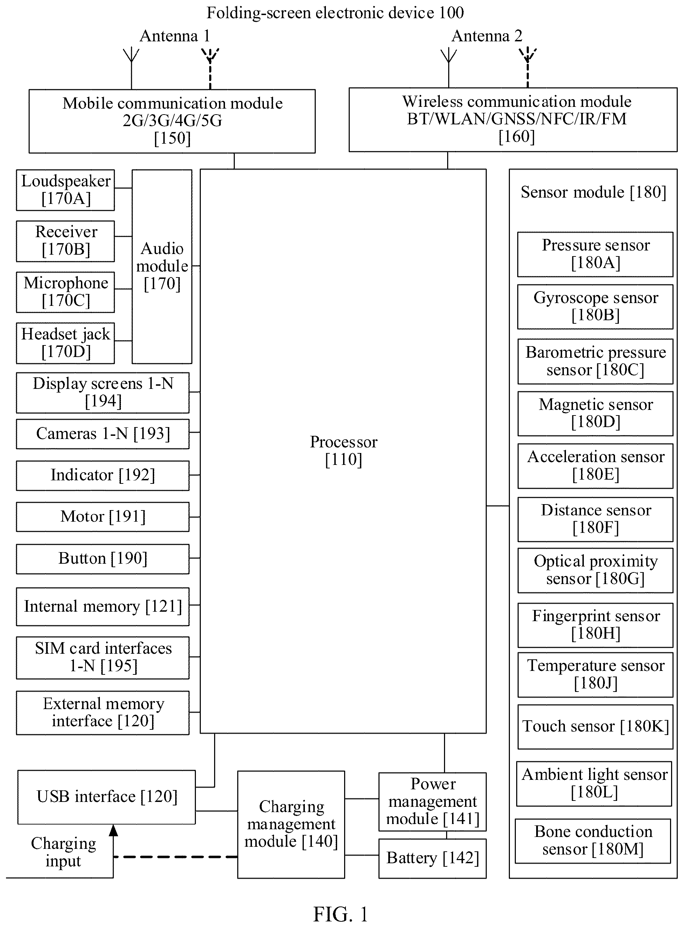

FIG. 1 is a schematic structural diagram of a folding-screen electronic device 100 according to an embodiment of this application. However, a structure shown in FIG. 1 does not constitute a limitation to the folding-screen electronic device in this application.

The folding-screen electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display scree 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It should be understood that the folding-screen electronic device 100 may implement a display function through a GPU, the display screen 194, an application processor, and the like. The GPU is a microprocessor for image processing and is connected to the display screen 194 to the application processor. In this embodiment of this application, the GPU is configured to perform mathematical and geometrical calculation, generate or change a displayed projected image based on an instruction of the processor 110, and display the projected image on the display screen 194.

In this embodiment of this application, the folding-screen electronic device 100 may include 1 or N display screens 194, N being a positive integer greater than 1. The display screen 194 is configured to display an image, a video, or the like. The display screen 194 includes a display panel. In an implementation of this application, a foldable display screen of the electronic device may include a first display portion and a second display portion. When the folding-screen electronic device 100 is in a half-folded state, the two display portions respectively display a projected image of a preset object, to present a three-dimensional visual effect to a user.

In this embodiment of this application, the folding-screen electronic device 100 may determine an observation point of the user by the camera 193, the distance sensor 180F, the application processor, and the like.

The gyro sensor 180B may be configured to determine a motion pose of the folding-screen electronic device 100. In this embodiment of this application, a folding angle of an included angle between the two display portions may be determined by the gyroscope sensor 180B.

It may be understood that the structure shown in this embodiment of this application does not constitute a specific limitation on the folding-screen electronic device 100. In this embodiment of this application, the folding-screen electronic device 100 may include more or fewer components than those shown in the figure, or some merged components, or some split components, or different component arrangements. The components shown in the figure may be implemented by hardware, software, or a combination of software and hardware.

A software system of the folding-screen electronic device 100 may use a layered architecture, an event-driven architecture, a micro core architecture, a micro service architecture, or a cloud architecture. In this embodiment of this application, an Android system with a layered architecture is used as an example to describe a software structure of the folding-screen electronic device 100.

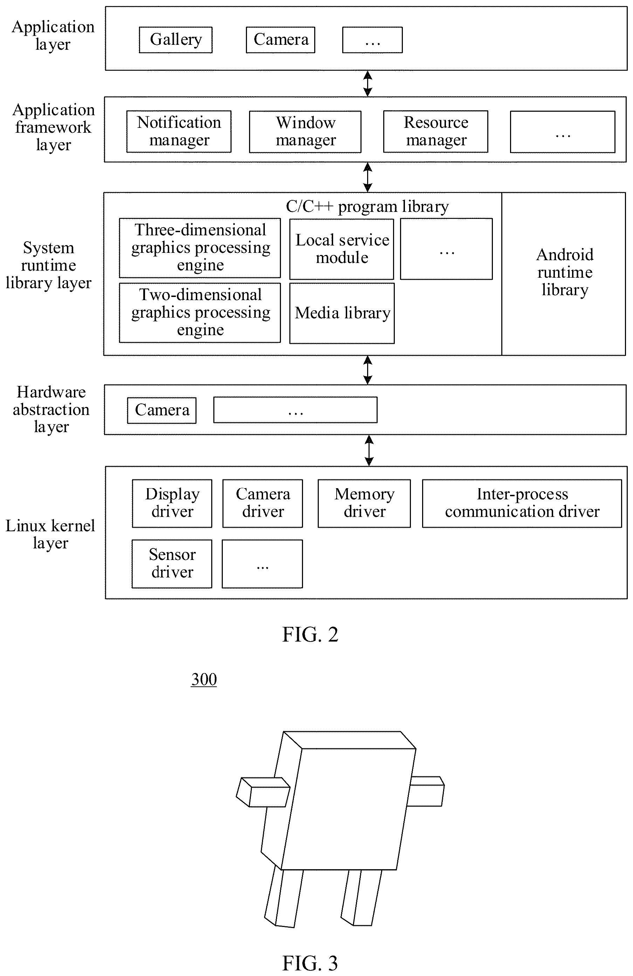

FIG. 2 is a block diagram of a software structure of a folding-screen electronic device 100 according to an embodiment of this application.

In a hierarchical architecture, software is divided into a plurality of layers, and each layer has a clear role and task. The layers communicate with each other through a software interface. In some embodiments, an Android system is divided into five layers, namely, an application layer, an application framework layer, an Android runtime library layer, a hardware abstraction layer, and a Linux kernel layer from top to bottom.

The application layer may include a series of application packages.

The application packages may include applications such as camera, gallery, calendar, phone, maps, navigation, WLAN, Bluetooth, music, videos, and messages. As shown in FIG. 2, in this embodiment of this application, the application layer includes at least the camera, the gallery, and the like.

The application framework layer provides an application programming interface (application programming interface, API) and a programming framework for the applications in the application layer. The application framework layer includes some predefined functions.

As shown in FIG. 2, the application framework layer may include a window manager, a resource manager, a notification manager, and the like.

The window manager is configured to manage a window program. The window manager may obtain a size of a display screen, determine whether there is a status bar, lock the screen, capture the screen, and the like. In this embodiment of this application, the window manager may be configured to obtain sizes of the first display portion and the second display portion. The sizes may be used for determining whether a projected image of a three-dimensional model of a preset object exceeds a display range of the first display portion and/or the second display portion, and displaying the projected image.

The resource manager provides various resources for an application, such as a localized character string, an icon, a picture, a layout file, and a video file.

The notification manager enables an application to display notification information in the status bar, may be configured to convey a notification-type message. The notification-type message may automatically disappear after the message is displayed for a short period of time without user interaction. For example, the notification manager is configured to provide a notification of downloading completion, a message notification, and the like. The notification manager may alternatively be a notification that appears on a top status bar of a system in a form of a graph or a scroll bar text, for example, a notification of an application that runs on a backend, or may be a notification that appears on a screen in a form of a dialog window. For example, text information is prompted in the status bar, a prompt tone is produced, the folding-screen electronic device vibrates, and an indicator light flashes.

The Android runtime library layer includes a C/C++ program library and an Android runtime library.

The Android runtime library layer includes a core library and a virtual machine, and is responsible for scheduling and management of an Android system.

The core library includes two parts: one part is a performance function that a Java language needs to invoke, and the other part is a core library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The C/C++ program library may include a plurality of function modules, such as a media library (Media Libraries), a three-dimensional graphics processing engine (for example, OpenGL ES), and a two-dimensional graphics processing engine (for example, SGL), a local service module, and the like.

The media library supports playback and recording of a plurality of commonly used audio and video formats, and static image files. The media library may support a plurality of audio and video encoding formats, for example, MPEG4, H.264, MP3, AAC, AMR, JPG, and PNG. In this embodiment of this application, the media library stores three-dimensional model data of a plurality of preset objects, and each model corresponds to an implementation scenario of the three-dimensional model. For example, in a game scenario, the three-dimensional model of the preset object may be a cat. In an always on display scenario, the three-dimensional model of the preset object may be a flying phoenix. In a screen wallpaper scenario, the three-dimensional model of the preset object is at least one object in a wallpaper. This is not limited in this application.

The three-dimensional graphics processing engine is configured to implement three-dimensional graphics drawing, image rendering, composition, layer processing, and the like. In this embodiment of this application, the three-dimensional graphic processing library stores program code for implementing this application. In a possible implementation, the program code further includes a face recognition algorithm library, a human eye recognition algorithm library, and the like.

The two-dimensional graphics engine is a drawing engine for two-dimensional drawing. In this embodiment of this application, the two-dimensional graphic processing engine converts the projected images of the first display portion and the second display portion into an image in a two-dimensional format.

The local service module includes code of a system program, and is configured to provide support for a system service.

The hardware abstraction layer is an interface layer between an operating system kernel and a hardware circuit, to abstract hardware. To protect an intellectual property right of a hardware vendor, the hardware abstraction layer hides hardware interface details of a specific platform, provides a virtual hardware platform for an operating system, and makes the operating system hardware-independent and capable of being transplanted on a plurality of platforms. From the perspective of testing of software and hardware, testing of software and hardware may be separately completed based on the hardware abstraction layer, making parallel testing of software and hardware possible. Commonly speaking, an action of controlling hardware is placed at the hardware abstraction layer.

In this embodiment of this application, the hardware abstraction layer includes at least driver code of a camera.

The Linux kernel layer is a layer between hardware and software. The Linux kernel layer includes at least a camera driver, a memory driver, an inter-process communication driver, a display driver, and a sensor driver.

It should be noted that this application may be applicable to any scenario described below, and the following list of possible scenarios is not intended to be a specific limitation on applicable scenarios of this application.

In a possible scenario, a folding-screen electronic device provides an always on display (always on display, AOD) function, and a user has enabled the function. The folding-screen electronic device may display a projected image of a preset object corresponding to the always on display based on an observation point of the user when detecting that a screen is off and is in a half-folded state. The following is an illustrative explanation of a workflow of the software and hardware of the folding-screen electronic device 100 in conjunction with the always on display scenario when the folding-screen electronic device is in a half-folded state.

When a screen of the folding-screen electronic device is in the half-folded state, if it is detected that the screen of the folding-screen electronic device is in an off state, an application layer program corresponding to the always on display turns on a front camera of the folding-screen electronic device by invoking the camera driver of the Linux kernel layer, and triggers the front camera to automatically capture a current image and transfer the current image to the human eye recognition algorithm library of a system runtime library layer, and the human eye recognition algorithm library determines the observation point of the user based on recognized human eye position information. In addition, the application layer program corresponding to the always on display further invokes the sensor driver to obtain a current screen folding angle formed by the first display portion and the second display portion of the folding-screen electronic device. The program code in the three-dimensional graphic processing engine constructs a three-dimensional coordinate system based on the observation point of the user and the screen folding angle of the folding-screen electronic device, calculates projected image coordinates of the three-dimensional model of the preset object in the coordinate system, converts the coordinates into displayable pictures through the two-dimensional graphic processing engine, transfers the pictures to the application layer, and respectively displays the pictures in the first display portion and the second display portion. Optionally, the preset object of the always on display may be a flying phoenix, and the phoenix presents a three-dimensional effect from the perspective of the user.

In another possible scenario, the folding-screen electronic device is equipped with an application (application, APP). The APP has a splash screen when started. If it is detected that a screen is in a half-folded state when the APP is started, a projected image corresponding to the splash screen may be displayed based on a position where the user is located, so that the user may see the splash screen presenting a three-dimensional effect.

In addition, a display method provided in this application may further be applied to a game APP interface for displaying an object in a game, so that the object presents a three-dimensional effect in user vision.

It should be understood that in this application, in an implementation scenario of the splash screen of the APP, an implementation scenario of a game APP, or any other implementable scenario, the working procedures of software and hardware of the folding-screen electronic device 100 is similar to that of the foregoing always on display scenario, and details are not described herein again.

The technical solutions of this application and the technical solutions of this application are described in detail below through specific embodiments. The following several specific embodiments may be independently implemented, and may alternatively be combined with each other, and the same or similar concepts or processes may not be described repeatedly in some embodiments.

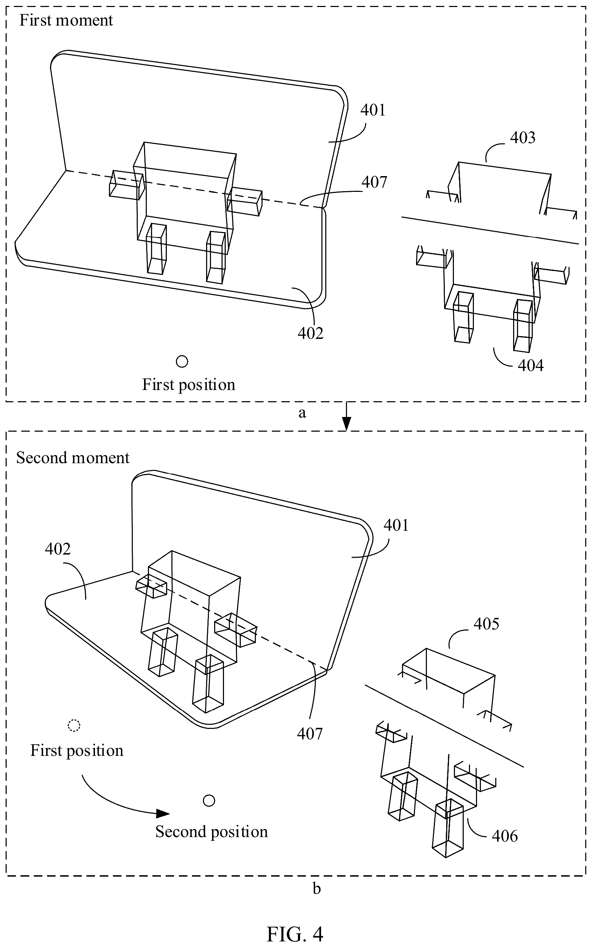

For example, a three-dimensional model 300 shown in FIG. 3 is used as a three-dimensional model of a preset object, and a display method provided in this application is described with reference to FIG. 4. A hardware structure of a folding-screen electronic device shown in FIG. 4 may be shown in FIG. 1, and a software structure may be shown in FIG. 2. However, the above is not specifically limited in this application.

a in FIG. 4 is an example diagram of a display interface of a folding-screen electronic device in a half-folded state at a first moment. At the first moment, when the folding-screen electronic device detects that an observation point of a user is located at a first position, a first projected image 403 of a preset object is displayed through a first display portion 401 based on the first position, and a second projected image 404 of the preset object is displayed through a second display portion 402. A method for determining the observation point of the user is specifically described below.

b in FIG. 4 is an example diagram of a display interface of a folding-screen electronic device in a half-folded state at a second moment. At the second moment, the folding-screen electronic device detects that the observation point of the user is located at a second position. Based on the second position, a third projected image 405 of a preset object is displayed through a first display portion 401, and a fourth projected image 406 of the preset object is displayed through a second display portion 402.

The first projected image 404, the second projected image 403, the third projected image 405, and the fourth projected image 406 are all determined based on a three-dimensional model 300 of the preset object shown in FIG. 3. Therefore, content presented by the projected images seen by the user at different observation points is a three-dimensional effect of the three-dimensional model 300 at perspectives corresponding to the different observation points. Optionally, the three-dimensional model of the preset object may be a three-dimensional model of an object in any other form. This is not specifically limited in this application.

For ease of understanding, the first projected image 403, the second projected image 404, the third projected image 405, and the fourth projected image 406 in FIG. 4 each show only outlines of projected images. During specific implementation, the projected images may be displayed as images filled with colors or shadowed. This is not limited in this application.

In a and b of FIG. 4, a dashed line 407 represents a screen folding line of the first display portion 401 and the second display portion 402, and a screen of the folding-screen electronic device may be folded and unfolded based on the folding line. Similarly, the folding line is a dividing line between the first projected image 403 and the second projected image 404, and is also a dividing line between the third projected image 405 and the fourth projected image 406.

From a (the first moment) in FIG. 4 to b (the second moment) in FIG. 4, the half-folded state of the folding-screen electronic device does not change, but the observation point of the user is moved from the first position to the second position. An image displayed by the first display portion 401 is updated from the first projected image 403 to the third projected image 405, and an image displayed by the second display portion 402 is updated from the second projected image 404 to the fourth projected image 406.

It should be understood that in a process in which the observation point of the user moves relative to the folding-screen electronic device, projected images on both the first display portion and the second display portion of the folding-screen electronic device continuously change as the observation point of the user changes. The first moment and the second moment above are merely examples in which observation points of two users are located at different positions. The change of the observation point of the user may be a continuous process. A plurality of moments may be taken during the change of the observation point of the user to determine the projected image. In other words, the folding-screen electronic device may collect the observation point of the user at a specific frequency, and display a projected image corresponding to the position based on the collected observation point of the user. Therefore, even if moving relative to the folding-screen electronic device, the user can approximately see a continuously changing projected image presenting a three-dimensional effect, as if the user observes a three-dimensional object.

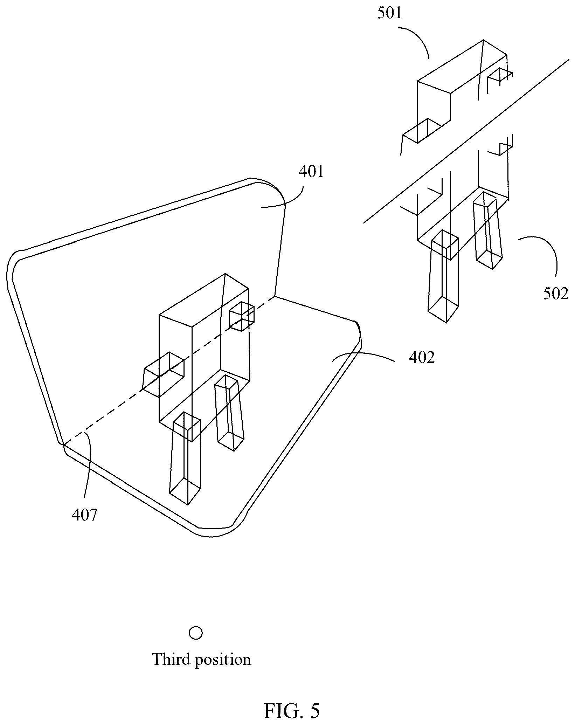

The first position, the second position, and a moving route from the first position to the second position shown in FIG. 4 are all examples. The observation point of the user may be any position where the user can see a display screen of the folding-screen electronic device, for example, may alternatively be a third position shown in FIG. 5. The folding-screen electronic device displays, based on the third position, a third projected image 501 of the preset object through the first display portion 401, and displays a fourth projected image 502 of the preset object through the second display portion 402. The projected image seen by the user based on the third position has a different visual effect from that of the first position and the second position. The first position and the second position shown in FIG. 4 and the third position shown in FIG. 5 do not constitute a limit to a specific position of the observation point of the user in this application.

In this embodiment of this application, the screen of the folding-screen electronic device is in the half-folded state. Based on the position of the observation point of the user and the three-dimensional model of the preset object, the first display portion and the second display portion of the folding-screen electronic device respectively display a first projected image and a second projected image of the preset object. Because the folding-screen electronic device has a specific folding angle, the first projected image and the second projected image that are seen by the user based on the first position present a three-dimensional effect. In addition, when the observation point of the user is moved from the first position to the second position, the folding-screen electronic device redisplays the projected image of the preset object based on the detected change of the observation point and the second position where the user is located. In this way, the third projected image and the fourth projected image seen by the user at the second position are different from the first projected image and the second projected image seen by the user at the first position. The projected images may change with the movement of the observation point of the user, and different viewing effects are presented based on different angles of the observation point of the user, as if a three-dimensional object is seen. According to the method provided in this application, a three-dimensional visual effect of the preset object is presented based on the folding property of the folding-screen electronic device. In addition, an image seen by the user may change with the movement of the observation point, which increases a utilization rate of the folding property of the folding-screen electronic device and enhances gaming experience of the user.

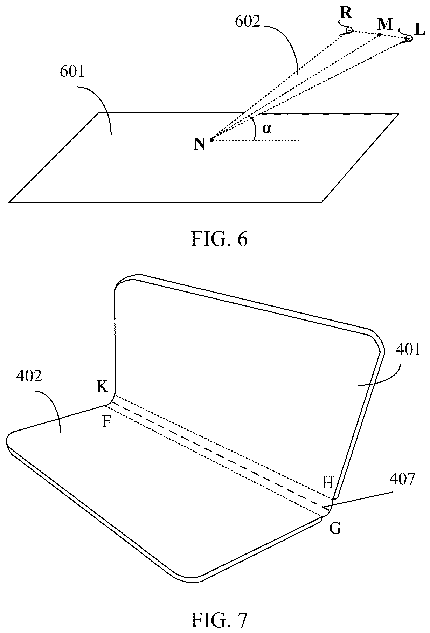

In an optional embodiment, the observation point of the user may be a midpoint of a connection line between a pair of eyes of the user. The method for determining the observation point of the user is described by using the method for determining the first position of the folding-screen electronic device at the first moment as an example. The method includes: determining, by a camera of the folding-screen electronic device, a left eye position of the user and a right eye position of the user; and determining a midpoint position between the left eye position and the right eye position as the observation point of the user, that is, the foregoing first position. The method is described below with reference to FIG. 6.

As shown in FIG. 6, a plane 601 is used to represent a plane in which a first display portion or a second display portion of a folding-screen electronic device is located, N is any point in the plane 601, a midpoint M between a left eye L and a right eye R of a user is an observation point of a user. At a first moment, determining a first position is determining position information of the point M.

In a possible implementation, the folding-screen electronic device obtains an avatar of the user by a camera, recognizes a left eye and a right eye of the user based on a pre-configured face recognition model and/or human eye recognition model, calculates distances RL and RN between the left eye L and the right eye R and any point N in the plane 601 by a sensor, and further calculates a distance of a median MN of an RL side in the $\triangle$NLR. An included angle $\alpha$ between a plane 602 formed by points of the left eye L, the right eye R, and the point N of the user and the plane 601 may further be calculated through the sensor. The included angle is also an included angle between a straight line on which M and N are located and the plane 601. The position information of M includes a distance between M and N and the included angle $\alpha$.

In a possible implementation, first coordinates of M in a preset coordinate system may be determined based on the preset coordinate system, the distance between M and N, and the included angle $\alpha$. The preset coordinate system may be any three-dimensional coordinate system.

In a possible implementation, the folding-screen electronic device may further be equipped with at least two cameras, and the first position where the observation point of the user is located is determined based on distances between the at least two cameras and the left eye and the right eye of the user. The determining method is not specifically limited in this application.

In a possible implementation, the folding-screen electronic device may determine the position of the observation point of the user once every preset time interval. Optionally, the preset time interval may be as small as possible, so as to determine a position of the observation point of the user in time when the position continuously changes, and display a projected image based on the position in time, to ensure that the user has a continuous stereoscopic visual experience. A value of the preset time interval is not specifically limited in this application.

In an optional embodiment, when the folding-screen electronic device is in the half-folded state, a curved transition portion is formed on a connection portion between the first display portion and the second display portion. At the first moment, in addition to the first display portion and the second display portion, a fifth projected image may further be displayed through the curved transition portion. The fifth projected image is determined based on the first position and the three-dimensional model of the preset object. At the second moment, a sixth projected image may further be displayed through the curved transition portion. The sixth projected image is determined based on the second position and the three-dimensional model of the preset object.

For example, as shown in FIG. 7, KHGF represents the curved transition portion formed by the connection portion between the first display portion and the second display portion. A region defined by KH and a folding line 407 is adjacent to the first display portion 401, and a region defined by FG and the folding line 407 is adjacent to a second display portion 402. At the first moment, the fifth projected image is displayed on a curved transition portion KHGF. At the second moment, the sixth projected image is displayed on the curved transition portion KHGF.

It should be understood that when a curved surface exists on the connection portion between the first display portion and the second display portion, the first projected image and the third projected image described above can be displayed only in the first display portion, and the second projected image and the fourth projected image can also be displayed only in the second display portion. In this way, the curved transition portion connected by two display portions generates a bright line because no image is displayed, which affects visual experience of the user.

According to the method provided in embodiments of this application, when the curved transition portion exists on the connection portion between the first display portion and the second display portion of the folding-screen electronic device, at the first moment, the fifth projected image is displayed on the curved transition portion. The user not only sees the first projected image and the second projected image, but also sees the fifth projected image based on the observation point thereof. At the second moment, the sixth projected image is displayed on the curved transition portion. The user not only sees the third projected image and the fourth projected image, but also sees the sixth projected image based on the observation point thereof. Displaying the fifth projected image/the sixth projected image on the curved surface where the screen is curved can weaken the bright line generated by the curved surface, optimizing the visual experience of the user.

In an optional embodiment, before the displaying a first projected image of a preset object through the first display portion, and displaying a second projected image of the preset object through the second display portion, the method provided in this application further includes: establishing a preset coordinate system based on the folding-screen electronic device, and representing the first position and the three-dimensional model of the preset object in the preset coordinate system; and determining the first projected image and the second projected image based on the preset coordinate system, the first position, and the three-dimensional model of the preset object.

It should be understood that the preset coordinate system may be any three-dimensional coordinate system. The coordinate representation in embodiments of this application is calculated by using the preset coordinate system as a reference system.

A principle of the method for determining the first projected image and the second projected image is the same as that of the method for determining the third projected image and the fourth projected image. To avoid repetition, in embodiments of this application, the method for determining the first projected image and the second projected image is used as an example for description below.

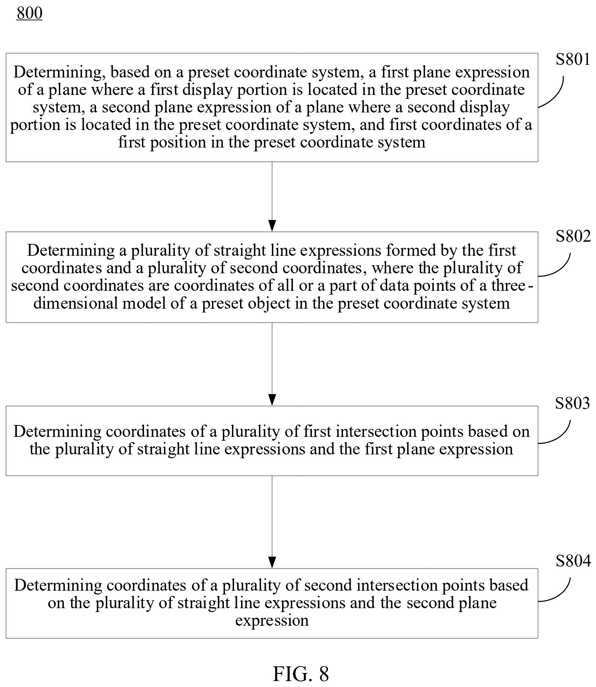

FIG. 8 is a schematic flowchart of a method 800 for determining a first projected image and a second projected image according to this application. The first projected image is represented through coordinates of a plurality of first intersection points, and the plurality of first intersection points may form the first projected image. The second projected image is represented through coordinates of a plurality of second intersection points, and the plurality of second intersection points may form the second projected image.

The method 800 includes the following steps.

S801: Determining, based on a preset coordinate system, a first plane expression of a plane where a first display portion is located in the preset coordinate system, a second plane expression of a plane where a second display portion is located in the preset coordinate system, and first coordinates of a first position in the preset coordinate system.

S802: Determining a plurality of straight line expressions formed by the first coordinates and a plurality of second coordinates, where the plurality of second coordinates are coordinates of all or a part of data points of a three-dimensional model of a preset object in the preset coordinate system.

S803: Determining the coordinates of the plurality of first intersection points based on the plurality of straight line expressions and the first plane expression.

S804: Determining coordinates of the plurality of second intersection points based on the plurality of straight line expressions and the second plane expression.

S803 and S804 above may be simultaneously performed, or S803 may be first performed and then S804 is performed, or S804 is first performed and then S803 is performed. This application does not limit the sequence of performing S803 and S804.

It should be understood that the three-dimensional model of the preset object stored in the folding-screen electronic device refers to a data model configured to describe a three-dimensional form of the preset object. Optionally, the model may be a three-dimensional model of a virtual object constructed through three-dimensional model software, or may be a three-dimensional model of a physical object obtained by capturing an outline of the physical object through a three-dimensional camera. Data of the three-dimensional model stored in the folding-screen electronic device may be point cloud data. An obtaining manner of the three-dimensional model and a data type thereof are not specifically limited in this application.

It should be further understood that, the preset coordinate system may be any created three-dimensional coordinate system. Regardless of whether the preset coordinate system is used as a reference system, during implementation of the method 800, coordinates of all or a part of the data points of the three-dimensional model should be converted to coordinate expressions with the preset coordinate system as the reference system. However, the preset coordinate system is not specifically limited in this application.

In this embodiment of this application, the first projected image is represented by the coordinates of the plurality of first intersection points, and the second projected image is represented by the coordinates of the plurality of second intersection points. When the folding-screen electronic device is in the half-folded state, a three-dimensional effect may be presented on the preset object seen by the user who uses a first coordinate position as the observation point, thereby helping to improve player experience of the user.

In an optional embodiment, the foregoing fifth projected image may also be represented through coordinates of a plurality of third intersection points. Before the fifth projected image is displayed through the curved transition portion, a curved surface expression of the curved transition portion in the preset coordinate system may be determined based on a curved surface radius of the curved transition portion and the preset coordinate system, and coordinates of the plurality of third intersection points may be determined based on a plurality of straight line expressions and the curved surface expression.

It should be understood that the sixth projected image may also be represented through a plurality of intersection point coordinates, and a coordinate determination manner thereof is similar to a method for determining coordinates of a plurality of third intersection points. Details are not described herein again. A difference between the method for determining coordinates of a plurality of third intersection points and the foregoing method for determining coordinates of a plurality of first intersection points lies in determining the curved surface expression. Determining of the curved surface expression is described in detail below with reference to FIG. 7, and no further details are provided herein again.

It should be further understood that a display range of the first display portion and a display range of the second display portion are fixed, but an observation point of the user may move. In a possible implementation, as the observation point of the user changes, the projected image of the three-dimensional model of the preset object may exceed the display range of the first display portion and/or the display range of the second display portion. Therefore, before or after the projected image of the three-dimensional model of the preset object is displayed, whether the display range of the projected image exceeds the display range of the first display portion and/or the second display portion may be determined. If yes, the projected image is displayed after a corresponding adjustment is made, so as to ensure that the preset object seen by the user is complete. If not, the projected image is directly displayed.

Specifically, the step of performing determining before the projected image of the three-dimensional model of the preset object is displayed may be performed before S802. After the determination is performed, the foregoing S802 is updated as: determining the plurality of straight line expressions formed by the first coordinates and the plurality of second coordinates when the first projected image does not exceed the display range of the first display portion and the second projected image does not exceed the display range of the second display portion.

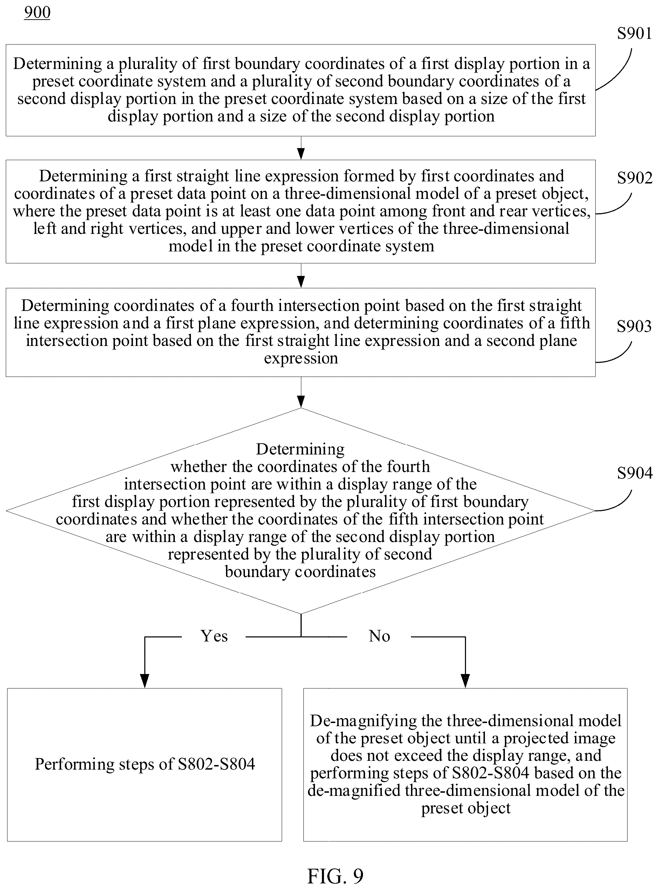

In an optional embodiment, FIG. 9 is a method 900 of performing determining before a projected image of a three-dimensional model of a preset object is displayed. The display range of the first display portion is represented by a plurality of first boundary coordinates, and the display range of the second display portion is represented by a plurality of second boundary coordinates. The method 900 is a possible method of determining, based on a size of the first display portion and a size of the second display portion, whether a projected image of a three-dimensional model of a preset object exceeds the display range of the first display portion and/or the display range of the second display portion. The method 900 includes the following steps:

S901. Determining the plurality of first boundary coordinates of the first display portion in the preset coordinate system and the plurality of second boundary coordinates of the second display portion in the preset coordinate system based on the size of the first display portion and the size of the second display portion.

It should be understood that the size of the first display portion and the size of the second display portion may be stored in the folding-screen electronic device as screen parameters at delivery of the folding-screen electronic device. Optionally, the size of the first display portion and the size of the second display portion may be a length and a width of the first display portion and the second display portion.

S902: Determining a first straight line expression formed by the first coordinates and coordinates of a preset data point on the three-dimensional model of the preset object, where the preset data point is at least one data point among front and rear vertices, left and right vertices, and upper and lower vertices of the three-dimensional model in the preset coordinate system.

S903: Determining coordinates of a fourth intersection point based on the first straight line expression and the first plane expression, and determining coordinates of a fifth intersection point based on the first straight line expression and the second plane expression.

S904: Determining whether the coordinates of the fourth intersection point are within the display range of the first display portion represented by the plurality of first boundary coordinates and whether the coordinates of the fifth intersection point are within the display range of the second display portion represented by the plurality of second boundary coordinates.

If a determining result of the foregoing S904 is yes, it indicates that the projected image of the three-dimensional model of the preset object does not exceed the display range of the first display portion and/or the display range of the second display portion, and steps of S802-S804 in the foregoing method 800 may continue to be performed.

If the determining result of the foregoing S904 is no, it indicates that the projected image of the three-dimensional model of the preset object exceeds the display range of the first display portion or exceeds the display range of the second display portion. Before the foregoing S802, the three-dimensional model of the preset object should further be de-magnified based on the preset coordinate system, until the projected image of the three-dimensional model of the preset object does not exceed the display range of the first display portion and does not exceed the display range of the second display portion. Then the steps of S802-S804 in the foregoing method 800 are performed based on the de-magnified three-dimensional model of the preset object.

It should be understood that when an intersection point of the straight line expression and the first plane expression or the second plane expression is calculated, if excessive data points are used on the three-dimensional model of the preset object, a computing burden on the folding-screen electronic device may be caused. To reduce computing power consumption of the folding-screen electronic device, one possible implementation is as follows. Only a fourth intersection point and a fifth intersection point of the first straight line expression formed by the preset data point and the first coordinates, and the first plane expression and the second plane expression are calculated. The preset data point is at least one data point among the front and rear vertices, the left and right vertices, and the upper and lower vertices of the three-dimensional model, that is, an edge point of the three-dimensional model. Therefore, if the fourth intersection point is within the display range of the first display portion, and the fifth intersection point is within the display range of the second display portion, the projected image of the three-dimensional model of the preset object does not exceed the display range of the first display portion, and does not exceed the display range of the second display portion.

According to the method provided in embodiments of this application, before the first display portion displays the first projected image of the preset object, and the second display portion displays the second projected image of the preset object, it is determined in advance, based on the preset data point, whether the projected image of the three-dimensional model of the preset object exceeds the display range of the first display portion and/or the display range of the second display portion. When it is determined that the first projected image does not exceed the display range of the first display portion and the second projected image does not exceed the display range of the second display portion, subsequent display processing is performed based on all or a part of the data points of the three-dimensional model of the preset object in the preset coordinate system. This helps save computing power of the folding-screen electronic device, reduce calculation time of a display process, and bring a smoother experience to the user.

If whether the projected image exceeds the display range is not determined before the foregoing S802, or no valid result is obtained after the determination is performed, after the first projected image of the preset object is displayed through the first display portion, and the second projected image of the preset object is displayed through the second display portion, whether the first projected image and the second projected image exceed the display range of the first display portion and/or the second display portion may be further determined based on the size of the first display portion and the size of the second display portion. When the first projected image does not exceed the display range of the first display portion and the second projected image does not exceed the display range of the second display portion, the first projected image of the preset object is displayed through the first display portion, and the second projected image of the preset object is displayed through the second display portion.

It should be understood that a difference between the determination of whether the projected image exceeds the display range after the projected image of the three-dimensional model of the preset object is displayed and the foregoing method 900 in as follows. After S901, steps after S902 and S902 do not need to be performed. Whether the coordinates of the plurality of first intersection points obtained in the method 800 are all in the display range of the first display portion represented by the plurality of first boundary coordinates and the coordinates of the plurality of second intersection points are all in the display range of the second display portion represented by the plurality of second boundary coordinates are merely determined. If yes, it indicates that the first projected image does not exceed the display range of the first display portion and the second projected image does not exceed the display range of the second display portion, and the currently displayed projected image does not need to be adjusted. If not, it indicates that the first projected image exceeds the display range of the first display portion, and/or, the second projected image exceeds the display range of the second display portion.

If it is determined that the first projected image exceeds the display range of the first display portion, and/or the second projected image exceeds the display range of the second display portion, the first projected image and the second projected image which have been displayed need to be de-magnified in a same proportion based on a folding line of the folding-screen electronic device, to obtain an updated first projected image and an updated second projected image, until the updated first projected image does not exceed the display range of the first display portion and the updated second projected image exceeds the display range of the second display portion. In this case, the updated first projected image is displayed through the first display portion, and the updated second projected image is displayed through the second display portion.

According to the method provided in this application, when the first projected image exceeds the display range of the first display portion, and/or the second projected image exceeds the display range of the second display portion, adjustment may be performed in time, so that the user finally sees a complete projected image, thereby avoiding affecting user experience because the projected image exceeds the display range.

In an optional embodiment, the preset coordinate system is established by using a folding line between the first display portion and the second display portion as an X axis, a side edge of the second display portion as a Y axis, and a side edge of the first display portion as a Z axis, and the side edge of the first display portion and the side edge of the second display portion are in a same straight line when the included angle between the first display portion and the second display portion is 180 degrees.

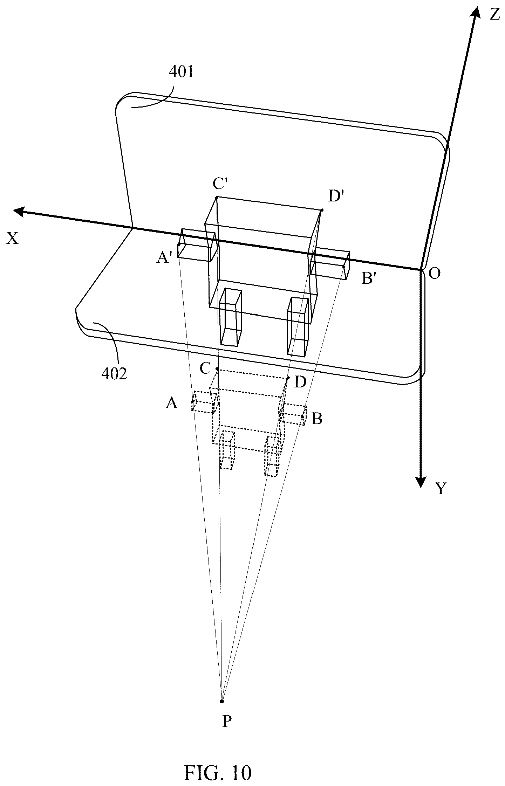

For example, the preset coordinate system may be shown in FIG. 10. In a preset coordinate system shown in FIG. 10, a point O is an origin of the preset coordinate system, a side edge of a first display portion 401 is a Z axis of the preset coordinate system, a side edge of a second display portion 402 is a Y axis of the preset coordinate system, and a folding line of the first display portion 401 and the second display portion 402 is an X axis of the preset coordinate system.

At a first moment, if an observation point of a user is P, the point P is a first position. A coordinate of the point P in a preset coordinate system is a first coordinate. A, B, C, and D are all points on a three-dimensional model of a preset object. An intersection point of PA and a plane of the second display portion 402 is A', an intersection point of PB and a plane of the second display portion 402 is B', an intersection point of PC and a plane of the first display portion 401 is C', and an intersection point of PD and a plane of the first display portion 401 is D'. A' and B' are included in a plurality of first intersection points, and C' and D' are included in a plurality of second intersection points. The plurality of first intersection points form a first projected image, and the plurality of second intersection points form a second projected image.

In an optional embodiment, during establishing the preset coordinate system in the manner shown in FIG. 10, when an included angle between the first display portion and the second display portion is 90 degrees, the preset coordinate system is an orthogonal coordinate system. When the included angle between the first display portion and the second display portion is not 90 degrees, the preset coordinate system is a non-orthogonal coordinate system.

In a possible implementation, the three-dimensional model of the preset object includes coordinates of all data points of the preset object, and the first projected image and the second projected image obtained based on the coordinates of all the data points can reflect all features of the preset object, thereby providing more real visual experience for a user.

In a possible implementation, the three-dimensional model of the preset object includes coordinates of a part of the data points of the preset object. By establishing a mesh to segment the three-dimensional model which includes coordinates of all data points of the preset object, with each unit cell taken as a data point, coordinates of a part of the data points of the preset object may be obtained. In this way, computing power of a folding-screen electronic device may be reduced, and a projected image of the preset object is updated more rapidly when the observation point of the user moves.

In an optional embodiment, the first projected image is represented through the coordinates and colors of the plurality of first intersection points, and the second projected image is represented through the coordinates and colors of the plurality of second intersection points. The method 800 further includes: determining color information of a plurality of data points on the three-dimensional model of the preset object corresponding to the plurality of first intersection points; and determining color information of a plurality of data points on the three-dimensional model of the preset object corresponding to the plurality of second intersection points.

It should be understood that the three-dimensional model of the preset object stored by the folding-screen electronic device includes coordinates of data points on the three-dimensional model and colors of the data points. A data form of any data point on the three-dimensional model may be represented as *V (x, y, z, (w))*, where *(x, y,* z) represents three-dimensional coordinates of the point in the preset coordinate system, and w represents color information of the point. Colors of the plurality of first intersection points and the plurality of second intersection points should respectively correspond to the plurality of data points on the three-dimensional model of the preset object. Refer to FIG. 10. Colors of a point C' and a point D' on a first projected image should respectively correspond to colors of a point C and a point D in a three-dimensional model of a preset object. Colors of a point A' and a point B' on a second projected image should respectively correspond to colors of a point A and a point B in the three-dimensional model of the preset object. The colors of the points A', B', C', and D' may be correspondingly obtained from data of the A, B, C, and D in the three-dimensional model of the preset object.

Optionally, the colors of the data points included in the three-dimensional model of the preset object may be represented by three primary colors of red, green, and blue (red, green, blue, RGB).

Optionally, the colors of the plurality of first intersection points and the plurality of second intersection points should be in one-to-one correspondence with the colors of the plurality of data points on the three-dimensional model of the preset object, or a preset coefficient may be assigned to cause the corresponding color to be lighter or darker. This is not specifically limited in this application.

A process of calculating coordinates of a projection point of the three-dimensional model of the preset object on a screen of a folding-screen electronic device is described in detail below by using an observation point P of a user, a screen folding angle of the folding-screen electronic device, the preset coordinate system, and the three-dimensional model of the preset object shown in FIG. 10 as an example. In FIG. 10, A, B, C, and D are data points on the three-dimensional model of the preset object. A' and B' are data points of a projected image on the second display portion 402, and C' and D' are data points of a projected image on the first display portion 401. Processes of calculating coordinates of the data points A', B', C', and D' are the same. A description is given below merely by using the process of calculating coordinates of C' as an example. C' is obtained by projecting C.

It should be understood that the step of solving the coordinates of C' in the preset coordinate system includes three steps: ① solving an expression of a straight line PC based on the coordinates of a point P and the point C; ② determining a plane expression of a plane XOZ where the first display portion 401 is located; and ③ solving coordinates of an intersection point C' of the straight line PC and the plane XOZ.

As shown in FIG. 10, the point P is the observation point of the user, and the point C is the data point on the three-dimensional model of the preset object. Coordinates of the two points are known, so as to obtain the expression of the straight line PC: | = C + t (P - C). The straight line expression is a point-to-point linear equation expression, where *l* is any point on a straight line, and tis a parameter of the straight line.

In the preset coordinate system shown in FIG. 10, the plane expression of the plane XOZ where the first display portion 401 is located may be expressed as: *ax + by + cz = d,* where *a, b,* and c are components of a normal vector of the plane XOZ, and d is a constant term of the equation.

The straight line expression *l = C + t (P - C)* is substituted into the plane expression *ax + by + cz = d,* to obtain:

$$a\left(lx\right) + b\left(ly\right) + c\left(lz\right) = d,$$

where l is a point in a vector form.

*l = C + t (P - C)* is substituted to obtain:

$$a[Cx + t(Px - Cx)] + b[Cy + t(Py - Cy)] + c[Cz + t(Pz - Cz)] = d.$$

The equation is solved to obtain a value of the parameter t, and the value of the parameter *t* is substituted into the straight line expression, to obtain:

$$\begin{cases} lx = Cx_{C'} + t(Px_{C'} - Cx_{C'}) \\ ly = Cy_{C'} + t(Py_{C'} - Cy_{C'}). \\ lz = Cz_{C'} + t(Pz_{C'} - Cz_{C'}) \end{cases}$$

The system of equations is solved to obtain the coordinates of the intersection point C' of the straight line expression and the plane expression, that is,

$$C'\left(x_{C'}, y_{C'}, z_{C'}\right).$$

For the curved surface KHFG shown in FIG. 7, a curved surface expression of the curved surface in the preset coordinate system may be expressed as:

$$(x - e)^2 + (y - f)^2 + (z - g)^2 = r^2.$$

In this case, *e, f, and g* represent a center of a cylinder where the curved surface KHFG is located, r represents a circle radius of the cylinder, and a part of the curved surface in the first display portion 401 should satisfy that x is greater than 0 and less than or equal to a length of the first display portion, z is greater than 0 and less than half of a width of the first display portion, and |y| is greater than 0 and less than half of a width of the first display portion.

Similarly, the straight line expression may be substituted into the curved surface expression to solve coordinates of a projection point on the curved surface. During solving, an iterative method such as the Newton's method or the bisection method may be used to gradually approximate a root of the equation. Details are not described herein again.

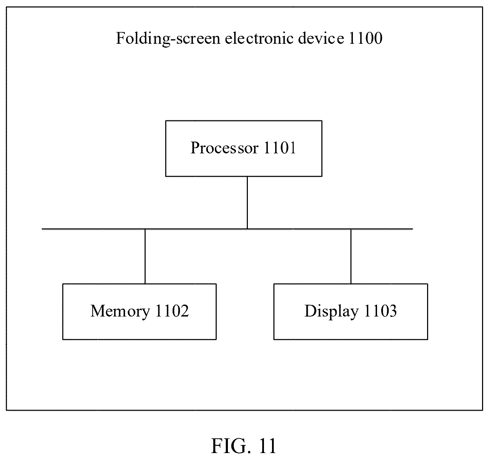

A display method is described above with reference to FIG. 1 to FIG. 10, and a folding-screen electronic device is described below with reference to FIG. 11.

FIG. 11 shows a folding-screen electronic device 1100 according to an embodiment of this application. The folding-screen electronic device 1100 includes a processor 1101, a memory 1102, and a display 1103. The processor 1101 and the memory 1102 communicate with each other through an internal connection path. The memory 1102 is configured to store an instruction. The processor 1101 is configured to execute the instruction stored in the memory 1102. The display 1103 is configured to display a processing result of the processor 1102.

It should be understood that the folding-screen electronic device 1100 may be configured to perform steps and/or processes corresponding to the folding-screen electronic device in the foregoing method embodiments. Optionally, the memory 1102 may include a read-only memory and a random access memory, and provide an instruction and data to the processor. A part of the memory may further include a nonvolatile random access memory. For example, the memory may further store information of a device type. The processor 1101 may be configured to execute the instruction stored in the memory, and when the processor 1101 executes the instruction stored in the memory, the processor 1101 is configured to perform the steps and/or processes of the foregoing method embodiments corresponding to the folding-screen electronic device.

It should be understood that in embodiments of this application, the processor of the foregoing folding-screen electronic device may be a central processing unit (central processing unit, CPU). The processor may alternatively be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

During implementation, the steps of the foregoing method may be completed through an integrated logic circuit of hardware or an instruction in the form of software in the processor. The steps of the method disclosed in combination with embodiments of this application may be directly performed by a hardware processor, or may be performed through a combination of hardware and software modules in the processor. The software module may be stored in a storage medium that is mature in the art, such as a random access memory, a flash memory, a read-only memory, a programmable read-only memory, an electrically erasable programmable memory, or a register. The storage medium is located in the memory. The processor executes the instruction in the memory, and completes the steps of the foregoing methods in combination with hardware thereof. To avoid repetition, details are not described herein again.

This application further provides a computer-readable storage medium. The computer-readable storage medium is configured to store a computer program, and the computer program configured for implementing the method in the foregoing method embodiments.

This application further provides a computer program product. The computer program product includes a computer program (which may also be referred to as code or an instruction). When the computer program runs on a computer, the computer may perform the method in the foregoing method embodiments.

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1.    A display method, applied to a folding-screen electronic device comprising a first display portion and a second display portion, the method comprising:

determining that the folding-screen electronic device is in a half-folded state, wherein the half-folded state indicates that an included angle between the first display portion and the second display portion is between a first threshold and a second threshold;

determining, at a first moment, that an observation point of a user is located at a first position, displaying a first projected image of a preset object in the first display portion, and displaying a second projected image of the preset object in the second display portion, wherein the first projected image and the second projected image are determined based on a three-dimensional model of the preset object and the first position; and

determining, at a second moment after the first moment, that the observation point of the user is at a second position different from the first position, displaying a third projected image of the preset object in the first display portion, and displaying a fourth projected image of the preset object in the second display portion, wherein the third projected image and the fourth projected image are determined based on the three-dimensional model of the preset object and the second position.

2. The method according to claim 1, further comprising:

establishing a preset coordinate system based on the folding-screen electronic device, and representing the first position and the three-dimensional model of the preset object in the preset coordinate system; and

determining the first projected image and the second projected image based on the preset coordinate system, the first position, and the three-dimensional model of the preset object.

3. The method according to claim 2, wherein the first projected image is represented through coordinates of a plurality of first intersection points, and the second projected image is represented through coordinates of a plurality of second intersection points; and

the determining the first projected image and the second projected image based on the preset coordinate system, the first position, and the three-dimensional model of the preset object comprises:

determining, based on the preset coordinate system, a first plane expression of a plane where the first display portion is located in the preset coordinate system, a second plane expression of a plane where the second display portion is located in the preset coordinate system, and first coordinates of the first position in the preset coordinate system;

determining a plurality of straight line expressions formed by the first coordinates and a plurality of second coordinates, wherein the plurality of second coordinates are coordinates of all or a part of data points of the three-dimensional model of the preset object in the preset coordinate system;

determining the coordinates of the plurality of first intersection points based on the plurality of straight line expressions and the first plane expression; and

determining the coordinates of the plurality of second intersection points based on the plurality of straight line expressions and the second plane expression.

4. The method according to claim 3, wherein the first projected image is represented through the coordinates and colors of the plurality of first intersection points, and the second projected image is represented through the coordinates and colors of the plurality of second intersection points; and

the method further comprises:

determining color information of a plurality of data points on the three-dimensional model of the preset object corresponding to the plurality of first intersection points; and

determining color information of a plurality of data points on the three-dimensional model of the preset object corresponding to the plurality of second intersection points.

5. The method according to claim 4, wherein when the folding-screen electronic device is in the half-folded state, a curved transition portion is formed on a connection portion between the first display portion and the second display portion, and the method further comprises:

displaying a fifth projected image by the curved transition portion at the first moment, wherein the fifth projected image is determined based on the first position and the three-dimensional model of the preset object; and

displaying a sixth projected image by the curved transition portion at the second moment, wherein the sixth projected image is determined based on the second position and the three-dimensional model of the preset object.

6. The method according to claim 5, wherein the fifth projected image is represented through coordinates of a plurality of third intersection points, and before the displaying a fifth projected image by the curved transition portion, the method further comprises:

determining a curved surface expression of the curved transition portion in a preset coordinate system based on a curved surface radius of the curved transition portion and the preset coordinate system; and
determining the coordinates of the plurality of third intersection points based on the plurality of straight line expressions and the curved surface expression.

7. The method according to any one of claims 3 to 6, wherein before the determining a plurality of straight line expressions formed by the first coordinates and a plurality of second coordinates, the method further comprises:

determining, based on a size of the first display portion and a size of the second display portion, whether a projected image of the three-dimensional model of the preset object exceeds a display range of the first display portion and/or a display range of the second display portion; and
the determining a plurality of straight line expressions formed by the first coordinates and a plurality of second coordinates comprises:
determining the plurality of straight line expressions formed by the first coordinates and the plurality of second coordinates when the first projected image does not exceed the display range of the first display portion, and the second projected image does not exceed the display range of the second display portion.

8. The method according to claim 7, wherein the display range of the first display portion is represented through a plurality of first boundary coordinates, the display range of the second display portion is represented through a plurality of second boundary coordinates, and the determining, based on a size of the first display portion and a size of the second display portion, whether a projected image of the three-dimensional model of the preset object exceeds a display range of the first display portion and/or a display range of the second display portion comprises:

determining the plurality of first boundary coordinates of the first display portion in the preset coordinate system and the plurality of second boundary coordinates of the second display portion in the preset coordinate system based on the size of the first display portion and the size of the second display portion;
determining a first straight line expression formed by the first coordinates and coordinates of a preset data point on the three-dimensional model of the preset object, wherein the preset data point is at least one data point among front and rear vertices, left and right vertices, and upper and lower vertices of the three-dimensional model in the preset coordinate system;
determining coordinates of a fourth intersection point based on the first straight line expression and the first plane expression, and determining coordinates of a fifth intersection point based on the first straight line expression and the second plane expression; and
determining whether the coordinates of the fourth intersection point are within the display range of the first display portion represented by the plurality of first boundary coordinates, and whether the coordinates of the fifth intersection point are within the display range of the second display portion represented by the plurality of second boundary coordinates.

9. The method according to any one of claims 3 to 6, further comprising:

determining, based on the size of the first display portion and the size of the second display portion, whether the first projected image and the second projected image exceed the display range of the first display portion and/or the display range of the second display portion; and
the displaying a first projected image of a preset object in the first display portion, and displaying a second projected image of the preset object in the second display portion comprise:
displaying the first projected image of the preset object in the first display portion, and displaying the second projected image of the preset object in the second display portion when the first projected image does not exceed the display range of the first display portion and the second projected image does not exceed the display range of the second display portion.

10. The method according to any one of claims 2 to 9, wherein the preset coordinate system is established by using a folding line between the first display portion and the second display portion as an X axis, a side edge of the second display portion as a Y axis, and a side edge of the first display portion as a Z axis, and the side edge of the first display portion and the side edge of the second display portion are in a same straight line when the included angle between the first display portion and the second display portion is 180 degrees.

11. The method according to claim 10, wherein when the included angle between the first display portion and the second display portion is 90 degrees, the preset coordinate system is an orthogonal coordinate system.

12. The method according to claim 10, wherein when the included angle between the first display portion and the second display portion is not 90 degrees, the preset coordinate system is a non-orthogonal coordinate system.

13. The method according to any one of claims 1 to 12, wherein the observation point of the user is a midpoint of a connecting line between a pair of eyes of the user; and
the determining the first position comprises:

determining a left eye position of the user and a right eye position of the user by a camera; and
determining a midpoint position between the left eye position and the right eye position.

14. A folding-screen electronic device, comprising: a processor, wherein the processor is connected to a memory, the memory is configured to store a computer program, and when the processor invokes the computer program, the folding-screen electronic device is caused to perform the method according to any one of claims 1 to 13.

15. A computer-readable storage medium, configured to store a computer program, wherein the computer program comprises an instruction for implementing the method according to any one of claims 1 to 13.

16. A computer program product, comprising computer program code, wherein when the computer program code runs on a computer, the computer is caused to implement the method according to any one of claims 1 to 13.

Folding-screen electronic device 100

Antenna 1                                    Antenna 2

| Mobile communication module 2G/3G/4G/5G [150] | Wireless communication module BT/WLAN/GNSS/NFC/IR/FM [160] |

Loudspeaker [170A]

Receiver [170B]

Audio module [170]

Microphone [170C]

Headset jack [170D]

Display screens 1-N [194]

Cameras 1-N [193]

Indicator [192]

Motor [191]

Button [190]

Internal memory [121]

SIM card interfaces 1-N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [120]

Charging input

Charging management module [140]

Power management module [141]

Battery [142]

FIG. 1

| Application layer | Gallery | Camera | ... | |
|---|---|---|---|---|

| Application framework layer | Notification manager | Window manager | Resource manager | ... |
|---|---|---|---|---|

System runtime library layer

**C/C++ program library**

| Three-dimensional graphics processing engine | Local service module | ... | Android runtime library |
|---|---|---|---|
| Two-dimensional graphics processing engine | Media library | | |

| Hardware abstraction layer | Camera | ... |
|---|---|---|

Linux kernel layer

| Display driver | Camera driver | Memory driver | Inter-process communication driver |
|---|---|---|---|
| Sensor driver | ... | | |

FIG. 2

300

FIG. 3

FIG. 4

Third position

FIG. 5

FIG. 6

FIG. 7

800

| |
|---|
| Determining, based on a preset coordinate system, a first plane expression of a plane where a first display portion is located in the preset coordinate system, a second plane expression of a plane where a second display portion is located in the preset coordinate system, and first coordinates of a first position in the preset coordinate system |

S801

| |
|---|
| Determining a plurality of straight line expressions formed by the first coordinates and a plurality of second coordinates, where the plurality of second coordinates are coordinates of all or a part of data points of a three-dimensional model of a preset object in the preset coordinate system |

S802

| |
|---|
| Determining coordinates of a plurality of first intersection points based on the plurality of straight line expressions and the first plane expression |

S803

| |
|---|
| Determining coordinates of a plurality of second intersection points based on the plurality of straight line expressions and the second plane expression |

S804

FIG. 8

900

Determining a plurality of first boundary coordinates of a first display portion in a preset coordinate system and a plurality of second boundary coordinates of a second display portion in the preset coordinate system based on a size of the first display portion and a size of the second display portion

S901

Determining a first straight line expression formed by first coordinates and coordinates of a preset data point on a three-dimensional model of a preset object, where the preset data point is at least one data point among front and rear vertices, left and right vertices, and upper and lower vertices of the three-dimensional model in the preset coordinate system

S902

Determining coordinates of a fourth intersection point based on the first straight line expression and a first plane expression, and determining coordinates of a fifth intersection point based on the first straight line expression and a second plane expression

S903

Determining whether the coordinates of the fourth intersection point are within a display range of the first display portion represented by the plurality of first boundary coordinates and whether the coordinates of the fifth intersection point are within a display range of the second display portion represented by the plurality of second boundary coordinates

S904

Yes — No

Performing steps of S802-S804

De-magnifying the three-dimensional model of the preset object until a projected image does not exceed the display range, and performing steps of S802-S804 based on the de-magnified three-dimensional model of the preset object

FIG. 9

FIG. 10

Folding-screen electronic device 1100

Processor 1101

Memory 1102

Display 1103

FIG. 11

## INTERNATIONAL SEARCH REPORT

| | International application No. |
|---|---|
| | **PCT/CN2024/082925** |

| A. | CLASSIFICATION OF SUBJECT MATTER |
|---|---|

G06F3/14(2006.01)i

According to International Patent Classification (IPC) or to both national classification and IPC

| B. | FIELDS SEARCHED |
|---|---|

Minimum documentation searched (classification system followed by classification symbols)

IPC: G06F, H04N

Documentation searched other than minimum documentation to the extent that such documents are included in the fields searched

Electronic data base consulted during the international search (name of data base and, where practicable, search terms used)

CNABS: CNTXT; DWPI; CNKI: 荣耀终端有限公司, 折叠屏, 第一显示部分, 第二显示部分, 三维, 立体, 位置, 观测点, foldable, screen, first w display w part, second w display w part, three w dimension, stereo, 3D, position, observation w point

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 103402106 A (QINGDAO HISENSE ELECTRIC CO., LTD.) 20 November 2013 (2013-11-20) description, paragraphs [0023]-[0102], and figures 1-4 | 1-2, 10-16 |
| Y | CN 104750449 A (LENOVO (BEIJING) CO., LTD.) 01 July 2015 (2015-07-01) description, paragraphs [0053]-[0160], and figures 1-6 | 1-2, 10-16 |
| A | CN 113557495 A (SAMSUNG ELECTRONICS CO., LTD.) 26 October 2021 (2021-10-26) entire document | 1-16 |
| A | CN 103797443 A (AMAZON TECHNOLOGIES, INC.) 14 May 2014 (2014-05-14) entire document | 1-16 |
| A | CN 109785425 A (ZHUHAI CHAOFAN SHIJIE TECHNOLOGY CO., LTD.) 21 May 2019 (2019-05-21) entire document | 1-16 |
| A | US 2022206669 A1 (SONY GROUP CORP.) 30 June 2022 (2022-06-30) entire document | 1-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 May 2024** | **31 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/082925**

| Patent document cited in search report | | | Publication date (day/month/year) | Patent family member(s) | | | Publication date (day/month/year) |
|---|---|---|---|---|---|---|---|
| CN | 103402106 | A | 20 November 2013 | None | | | |
| CN | 104750449 | A | 01 July 2015 | None | | | |
| CN | 113557495 | A | 26 October 2021 | EP | 3864501 | A1 | 18 August 2021 |
| | | | | WO | 2020145697 | A1 | 16 July 2020 |
| | | | | KR | 20200086830 | A | 20 July 2020 |
| | | | | US | 2020225706 | A1 | 16 July 2020 |
| | | | | US | 11209865 | B2 | 28 December 2021 |
| | | | | US | 2022113767 | A1 | 14 April 2022 |
| | | | | US | 11934228 | B2 | 19 March 2024 |
| CN | 103797443 | A | 14 May 2014 | EP | 2732436 | A1 | 21 May 2014 |
| | | | | EP | 2732436 | B1 | 18 September 2019 |
| | | | | JP | 2014525089 | A | 25 September 2014 |
| | | | | WO | 2013010011 | A1 | 17 January 2013 |
| | | | | US | 2013016102 | A1 | 17 January 2013 |
| | | | | US | 9041734 | B2 | 26 May 2015 |
| CN | 109785425 | A | 21 May 2019 | None | | | |
| US | 2022206669 | A1 | 30 June 2022 | JPWO | 2021005871 | A1 | 14 January 2021 |
| | | | | DE | 112020003221 | T5 | 21 April 2022 |
| | | | | WO | 2021005871 | A1 | 14 January 2021 |

Form PCT/ISA/210 (patent family annex) (July 2022)

**EP 4 650 936 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310770373